# FASCICULE DE BREVET EUROPEEN

(11) **EP 3 682 182 B1**
(45) Date de publication et mention de la délivrance du brevet: **08.06.2022**
(21) Numéro de dépôt: 18762867.2
(22) Date de dépôt: 10.09.2018
(51) Int. Cl.: F41A 3/66, F41A 9/32, F42B 39/08

(54) **MITRAILLEUSE**
MASCHINENGEWEHR
MACHINE GUN

(30) Priorité: 11.09.2017 EP 17190388; 26.10.2017 EP 17198580
(43) Date de publication de la demande: 22.07.2020
(73) Titulaire: FN Herstal SA, 4040 Herstal (BE)
(72) Inventeur: FRANSSEN, Pascal Marcel Henri Denis, 4672 Saint-Rémy (BE); VERHAEGEN, Damien Nicole Freddy, 4890 Thimister (BE); BECKERS, Robert, 4633 Soumagne (BE); MICHOTTE, Paul, 4870 Trooz (BE); GODBILLE, Antoine, 4000 Liège (BE)
(74) Mandataire: AWA Benelux
(86) Numéro de dépôt international: PCT/EP2018/074288
(87) Numéro de publication internationale: WO 2019/048672

(56) Documents cités:
- DE-U1-202011 100 438
- FR-A1- 2 356 113

## Description

### Objet de l'invention

La présente invention se rapporte à une mitrailleuse, au système d'alimentation et à la carcasse d'une telle mitrailleuse, comme par exemple décrit dans FR2356113 A.

### Etat de la technique

L'ergonomie d'une arme est une notion assez particulière dans le sens où elle rassemble un certain nombre de critères allant de la masse et l'encombrement d'une arme à sa prise en mains dans les conditions de tir et de manipulation. Il est généralement admis qu'une arme dotée d'une meilleure ergonomie est une arme qui permet à son utilisateur de mieux remplir son rôle au sein de son unité. Une amélioration de l'ergonomie de l'arme peut se traduire de différentes manières sur le terrain. Elle peut aboutir à une augmentation de la mobilité de l'utilisateur, une amélioration de la disponibilité de l'arme sur le terrain, une facilitation de l'utilisation de l'arme...

On entend par mitrailleuse une arme à feu capable de tirer une bande de munition, par opposition aux armes à feu étant alimentée à partir d'un chargeur (fusil ou pistolet). La bande de munition se compose d'une série de cartouches liées entre elles par des maillons, lesdits maillons se détachants les uns des autres lorsque les cartouches en sont extraites.

La carcasse d'une mitrailleuse est la pièce centrale de l'arme, qui fait à la fois office d'élément structurel principal, mais aussi de base de référence pour le positionnement de toutes les pièces rapportées ou assemblées qui réalisent le cycle de fonctionnement de l'arme.

Dans la majorité des mitrailleuses les fonctions liées à l'alimentation par bande sont présentes dans la partie supérieure de l'arme. La bande de munition étant placée manuellement sur un couloir d'alimentation avant d'être maintenue par différents éléments présents dans le couvercle d'alimentation. Le principal avantage de cette configuration est qu'elle facilite les manipulations de réarmement et de résolution des incidents de tirs de par le positionnement horizontal du couloir d'alimentation ainsi que de par la bonne accessibilité, autant visuelle qu'au touché, des éléments réalisant les fonctions d'alimentation.

Un inconvénient de cette architecture est que, les systèmes de visée étant placé au-dessus du canon, il est nécessaire de les intégrer partiellement (organes de visée mécanique œilleton guidon) ou complètement (organes de visée modulaires monté via un rail standard Picatinny) sur le couvercle d'alimentation de l'arme. Il en résulte une certaine imprécision de l'alignement du point de visée et le point d'impact des projectiles en raison de l'incertitude sur le repositionnement du couvercle d'alimentation à chaque ouverture et fermeture de celui-ci.

Un autre inconvénient est l'impossibilité d'utilisation de certains organes optiques (lunette longue à fort grossissement, intensificateur de lumière, visée nocturne...) en raison de l'encombrement additionnel de l'optique principale de visée lors que le couvercle d'alimentation est en position ouvert. En effet, pour les mitrailleuses à alimentation par le dessus à couvercle long, les lunettes de visée sont directement montées sur le couvercle ce qui implique qu'à l'ouverture de celui-ci la lunette de visée est elle aussi basculée ce qui oblige à décaler vers l'avant les dispositifs de type intensificateur de lumière. Ces derniers n'étant plus monté directement devant la lunette de visée mais plus loin en avant avec un jour entre les deux optiques propice à une pollution tant optique (reflets d'une source lumineuse) que physique (pollution par du sable, de la boue...).

Suite au tir d'un grand nombre de munition dans un temps limité le canon chauffe fortement. Un autre inconvénient du montage des optiques sur les couvercles long est que lorsque le couvercle est maintenue ouvert, l'optique est orientée vers le canon. Dans ce cas la chaleur du canon est transmise vers l'optique ce qui peut la dégrader sensiblement celle-ci n'étant pas prévue pour tenir des températures aussi élevée. Pour éviter cela, il est nécessaire de placer un déflecteur de chaleur (heatshield) entre le canon et l'optique ce qui alourdi la mitrailleuse.

Sur certaines mitrailleuses (comme la mitrailleuse IMI Negev) le choix a été fait de limiter la longueur du couvercle d'alimentation au maximum. Cela permet de réduire les inconvénients précédemment cités en montant les optiques sur l'arrière de la carcasse, mais cela contraint fortement la longueur des optiques compatibles avec l'arme. En effet, dans ce cas, il est nécessaire que l'optique ne passe pas au-dessus du couvercle d'alimentation pour permettre l'ouverture de ce dernier. Cette limitation s'applique aussi à l'alignement de plusieurs organes d'optiques (intensificateur de lumière devant un organe de visée classique...), l'organe de devant doit, dans ce cas, soit être monté sur le couvercle (ce qui amène les inconvénients précédemment cités concernant les limitations des organes de visée monté directement sur le couvercle d'alimentation), soit être monté devant le couvercle d'alimentation ce qui l'écarte considérablement les deux dispositifs optiques.

Pour contourner ces problèmes certaines armes ont proposées des architectures alternatives en positionnant les fonctions d'alimentation soit dans la partie inférieure de l'arme (comme les mitrailleuses HK 21 et HK 23, XM 248), soit sur le côté de l'arme avec un couloir d'alimentation vertical (United States 7,92mm light machine gun t44, M60 à alimentation latérale). Ces deux alternatives présentes des inconvénients majeurs en ce qui concerne les opérations de changement de bandes ainsi que la résolution des incidents de tirs. Lorsque l'alimentation se fait par le bas, l'accessibilité des éléments d'avance de bande ainsi que la chambre est très limitée ce qui complique les opérations de vérification de la chambre vide, ainsi que la résolution des problèmes liés à l'alimentation ou l'extraction.

Lorsque l'alimentation est latérale avec un couloir d'alimentation vertical, les problèmes rencontrés portent principalement sur la mise en place d'une nouvelle bande de munition. En effet celle-ci aura souvent tendance à bouger voir à tomber avant que l'opérateur n'ait eu le temps de fermer le couvercle de l'arme. Ces différents inconvénients sont très pénalisants car les opérations de réarmements ou de résolution des incidents de tirs sont susceptibles d'arriver au pire moment (en plein engagement, sous un feu adverse) et se traduisent par une perte de puissance de feu sur un temps plus ou moins long.

Habituellement, la carcasse d'une mitrailleuse est réalisée par assemblage de composants intermédiaires. L'objectif est de pouvoir réaliser avec précision l'usinage de finition des différentes pièces avant d'assembler celles-ci. Les différents composants ont une forme « ouverte » qui permet l'accès aux outils de coupe (pour fraisage ou tournage). Pour les mitrailleuses cette ouverture est généralement pratiquée dans la partie supérieure de la carcasse car celle-ci sera recouverte par le couvercle d'alimentation qui est amovible pour permettre la mise en place d'une nouvelle bande.

Dans le cadre d'une mitrailleuse, ce type d'assemblage nécessite l'utilisation d'acier. En effet, pour conserver une raideur suffisante et éviter les zones affaiblies aux points d'assemblage, un matériau avec un module de Young et une limite élastique suffisante sont souvent requis. Cela est amplifié par le fait qu'une mitrailleuse doit maintenir un volume de feu plus important que les autres armes ce qui implique une augmentation de la température de l'arme et donc une dégradation de la performance des matériaux. Pour des raisons tant historiques qu'économique la matière privilégiée pour cette application a toujours été l'acier. La conséquence principale du choix de l'acier pour la carcasse de la mitrailleuse est un alourdissement sensible de l'arme. De ce fait, les mitrailleuses sont généralement sensiblement plus lourdes que les autres armes d'épaules utilisées par les unités d'infanterie ce qui pénalise sensiblement la mobilité de l'ensemble de l'unité.

Par ailleurs, pour une mitrailleuse, l'éjection des maillons est généralement réalisée par la dynamique de la bande en mouvement : lorsque la bande est poussée par son mécanisme d'avance, le maillon libéré de sa cartouche est dirigé vers sa fenêtre d'éjection hors de la carcasse. En particulier, une fois la dernière cartouche alimentée, il reste 2 maillons à éjecter. Aucun mécanisme n'est prévu pour ce cas particulier de la dernière cartouche.

Le risque principal de ce mode de fonctionnement est de permettre à un maillon de rentrer à l'intérieur de la carcasse par l'intermédiaire de l'ouverture du couloir d'alimentation qui permet le passage du verrou et de la cartouche. Si un maillon rentre à l'intérieur de la carcasse il va provoquer un incident de tir en bloquant le mouvement et le mécanisme des pièces comprises à l'intérieur de l'arme. Ce risque est augmenté si le couloir d'alimentation de la mitrailleuse est incliné par rapport à l'horizontale : la gravité peut alors diriger le maillon vers l'ouverture du couloir d'alimentation.

Un second problème est que le dernier maillon reste généralement sur le couloir d'alimentation, le soldat doit habituellement « nettoyer » celui-ci avant de positionner une nouvelle bande, et il y a donc une perte de temps associée.

Enfin, dans les mitrailleuses de l'art antérieur, rien ne maintient parfaitement (selon 6 degrés de libertés) la bande sur le couloir d'alimentation lorsque le couvercle est ouvert. Le rechargement d'une mitrailleuse s'effectue fréquemment avec une main sur la poignée, la seconde main libre devant ouvrir le couvercle puis positionner la bande sur celui-ci, avant de la lâcher pour refermer le couvercle. Cette opération de chargement s'effectue souvent sous stress puisqu'en position vulnérable sans munition à poste prête au tir. Si lors de cette opération la mitrailleuse est mise en mouvement, son couloir d'alimentation incliné, il y a un risque que la bande ne soit pas positionnée correctement une fois le couvercle fermé. L'opération de chargement sera alors suivie d'un incident de tir (pas de départ de coup de feu).

En résumé, les mitrailleuses conventionnelles présentent les inconvénients principaux suivant :
- Le couvercle mobile disposé sur le haut de l'arme empêche le positionnement fiable d'accessoires fixes tel qu'une lunette de visée ;
- En fin de bande, un ou des maillons restent généralement dans le couloir, et, le tireur doit généralement évacuer ces maillons avant de pouvoir recharger ;
- La mauvaise évacuation d'un maillon peut entrainer un incident de tir en bloquant le mécanisme de rechargement;
- Le positionnement de la bande, et en particulier le positionnement de la première cartouche est peu précis et peut aussi entrainer des incidents de tir ;
- La bande n'étant pas maintenue, l'utilisateur doit la maintenir jusqu'à la fermeture du couvercle, ce qui oblige à l'utilisation des deux mains.

### Résumé de l'invention

L'invention concerne une mitrailleuse selon la revendication 1.

Le corps de carcasse est creux, formé d'un seul tenant, comprenant un minimum d'orifices latéraux (entrée du couloir l'alimentation, percements de fixations de vis,...), et donc, comprenant une surface latérale essentiellement fermée.

Selon l'invention, l'arme à feu comprend un couloir d'alimentation et un couvercle disposés latéralement, inclinés vers l'extérieur par rapport à la verticale, l'axe d'ouverture du couvercle étant essentiellement vertical.

Selon l'invention, l'arme à feu selon l'invention comprend, sur sa face supérieure, une interface fixe d'assemblage d'accessoire, cette interface pouvant de préférence comprendre un rail de type Picatinny.

### Brève description des figures

La figure 1 représente une vue latérale d'une mitrailleuse selon l'invention.
La figure 2 représente une vue en perspective d'un exemple de couloir d'alimentation selon l'invention, couvercle ouvert, une bande de munition en place.
La figure 3 représente une vue en perspective d'un exemple de couloir d'alimentation selon l'invention, couvercle ouvert, sans bande de munition.
La figure 4 représente une vue en coupe d'un dispositif selon l'invention, le couvercle étant partiellement fermé.
La figure 5 représente une vue en coupe du dispositif de la figure 4, le couvercle fermé.
les figures 6 à 8 représentent des vues en coupe du dispositif de la figure 4 lors d'un cycle de tir et de réarmement d'une mitrailleuse de l'invention.
les figures 9 à 12 représentent des vues en coupe du dispositif de la figure 4 lors du cycle de tir de la dernière cartouche d'une bande de munition d'une mitrailleuse de l'invention.
La figure 13 représente une vue debout d'un couloir d'alimentation comprenant des moyens de maintien de la bande selon l'invention.
La figure 14 représente une griffe d'avancement de la bande et d'éjection du dernier maillon selon un exemple de l'invention.
La figure 15 représente un exemple de carcasse de mitrailleuse selon l'invention.
La figure 16 représente une vue éclatée d'un couloir d'alimentation selon l'invention.
La figure 17 représente une vue éclatée d'un couvercle de couloir d'alimentation selon l'invention
La figure 18 représente une vue en perspective d'un autre exemple de couloir d'alimentation comprenant des moyens de repositionnement de la bande.
La figure 19 représente une vue éclatée du couloir de la figure 18
Les figures 20 et 21 représentent des vues en coupe du dispositif comprenant le couloir des figures 18 et 19, montrant le mouvement induit par la fermeture du couvercle.

### Description détaillée de l'invention

Dans la présente description, nous nommerons « dernière munition » celle qui est à l'extrémité de la bande, soit à poste, soit prête à être alimentée. Les maillons seront bien entendu nommés de la même façon.

Le terme longitudinal, lorsqu'il se rapporte à un couloir d'alimentation, ou au mouvement d'une bande de munitions se rapporte au sens de déplacement d'alimentation de la bande, le canon étant donc dans la direction transverse par rapport au sens longitudinal d'alimentation de l'arme.

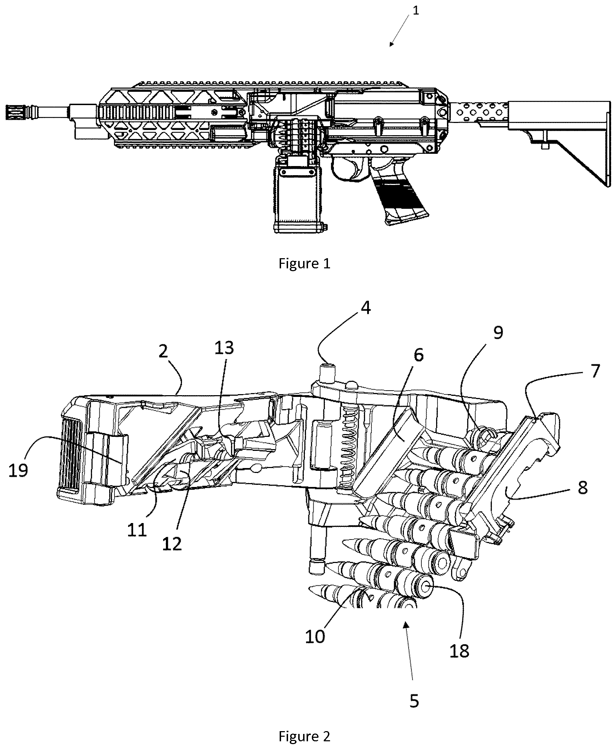

La figure 1 représente un exemple de mitrailleuse selon l'invention. Cette mitrailleuse présente une alimentation latérale permettant l'utilisation d'un rail de type Picatinny 21, continu et fixe sur le dessus du corps de carcasse 22. Par-dessus, nous entendons la partie supérieure lorsque l'arme est utilisée selon une position conventionnelle. Bien entendu, d'autres types d'interfaces de fixation d'accessoires pourraient être utilisés.

La figure 2 représente une vue en perspective du couloir d'alimentation avec une bande de munition 5 positionnée, couvercle 2 ouvert. Ce couvercle comprend des moyens de fermetures 19 coopérant avec des moyens correspondants sur la carcasse 22.

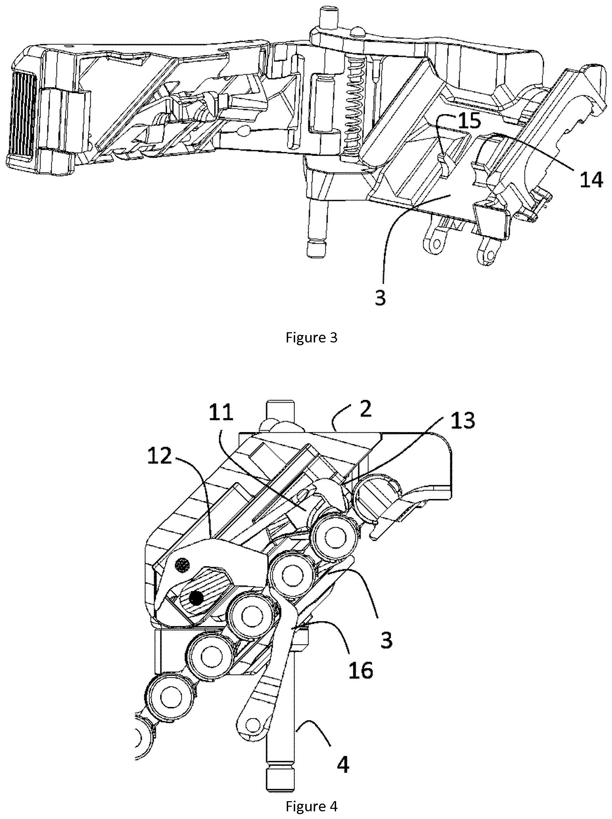

La figure 3, représente le même couloir, sans la bande de munition 5, ce qui permet de distinguer les cliquets 15 et 14, poussant respectivement sur la partie antérieure de l'avant dernière munition, et sur la partie centrale 10 de l'avant dernier maillon. Ces cliquets 14, 15 viennent en saillie de la surface de glissement 3 de la bande de munition 5. Comme nous le verrons plus loin, la position centrale du cliquet 14 permet d'éjecter le dernier maillon.

On observe aussi sur ces figures que la surface de glissement 3 du couloir d'alimentation, et la surface correspondante du couvercle 2 sont inclinées à 45°, tandis que l'axe 4 commun de ces deux ensembles est vertical. Cette disposition sécante de l'axe de rotation du couvercle par rapport au plan de glissement des munitions permet au couvercle d'avoir une composante de mouvement, lors de la fermeture, parallèle au mouvement de glissement des munitions 18.

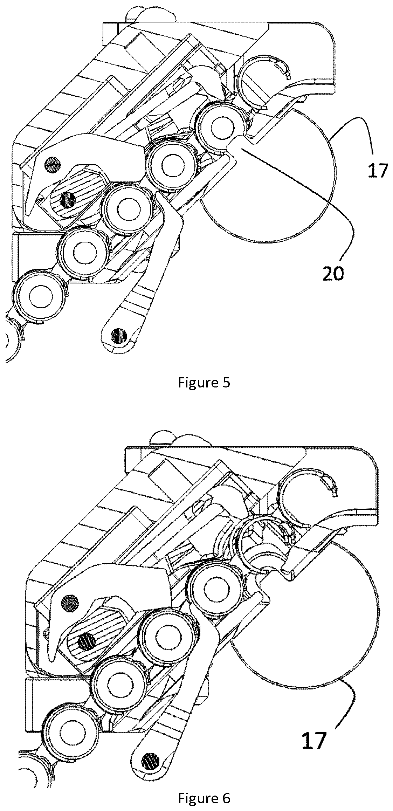

Cette composante horizontale permet à un cliquet anti-retour 12 de pousser sur l'avant dernière munition (ou plutôt ici sur la partie centrale de l'avant dernier maillon. Ce mouvement de positionnement est mieux illustré aux coupes de figures 4 et 5.

A la figure 4, le couvercle n'est pas encore fermé, et la bande repose sur les cliquets d'avancement de la bande 16, 15. Ces cliquets 15,16, libres de tourner autour de leur axe ne permettent pas un positionnement précis de la bande 5. En particulier, on voit à la figure 4 un positionnement trop bas de la dernière munition (i.e. la munition n'est pas « a poste » positionnée au milieu de l'ouverture du couloir d'alimentation). Enfin, la position des cliquets d'avancement dépend de la position du verrou 17 et des pièces mobiles, qui n'est pas univoque lors du placement de la bande, en particulier dans le cas d'arme opérant à culasse ouverte : le verrou 17 peut être en position avant, chambre vide et verrouillée, soit le verrou 17 est en position arrière, chambre vide. Selon le cas, (et selon les mécanismes d'entrainement de la bande) les cliquets 14, 15, 16 d'avancement seront à des positions différentes.

On observe à la figure 5, après fermeture du couvercle, que la pression du cliquet anti-retour 12 sur l'avant dernière munition a permis de repositionner correctement la bande 5.

Notons que le repositionnement de la bande peut être obtenu d'autres façons, l'essentiel étant que le mouvement de fermeture du couvercle puisse induire un mouvement de réajustement de la bande parallèle au glissement de celle-ci.

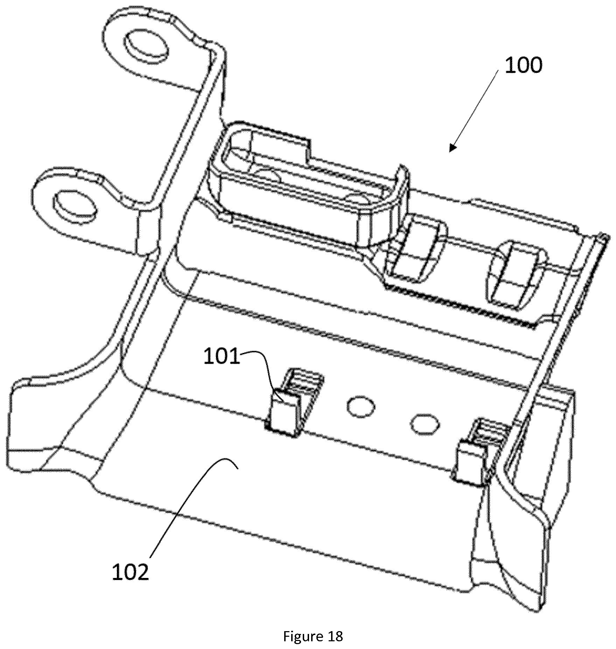

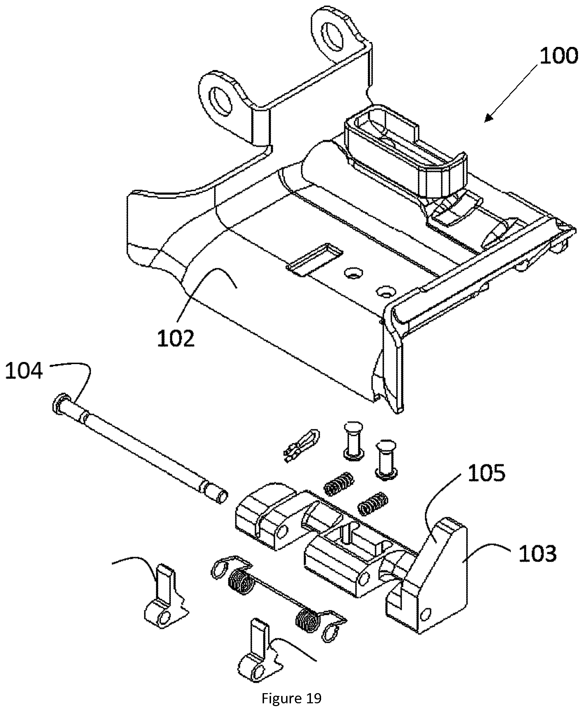

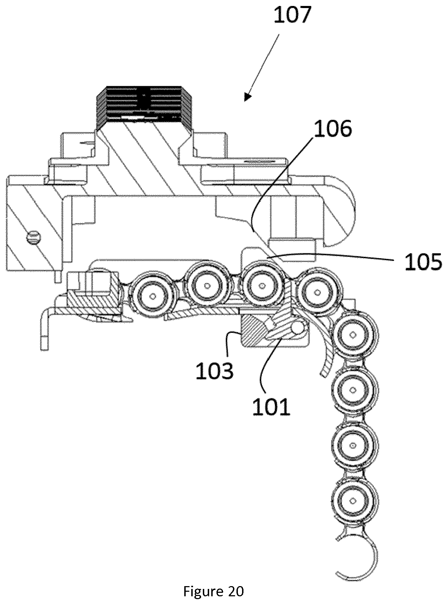

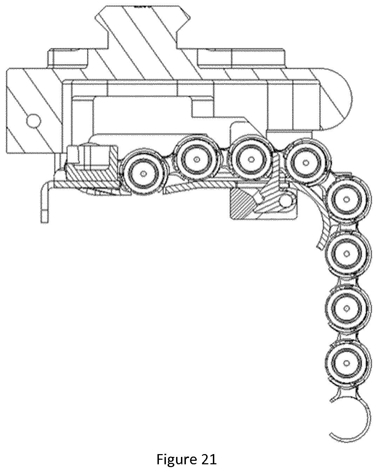

Un tel exemple alternatif est représenté pour un couloir d'alimentation 100 horizontal aux figures 18 à 21. Dans cet exemple, la bande 5 coulisse sur une surface horizontale 102 et est correctement positionnée par des cliquets anti-retour 101 actionnés par la fermeture du couvercle 107. A cette fin, les cliquets anti-retour 101 sont fixés sur un coulisseau 103 comprenant une surface inclinée 105 coopérant avec une surface inclinée correspondante 106 sur le couvercle 107.

Dans tous les cas, lors du mouvement de la bande induit par le mécanisme d'avance de bande, les cliquets anti-retour 101, 12 peuvent s'effacer pour laisser passer les munitions 18 successives dans le sens normal d'alimentation.

Le positionnement latéral de l'alimentation des figures 2 à 12, ainsi que le sens d'ouverture du couvercle 2 et du couloir d'alimentation selon un axe vertical permet aussi de libérer la face supérieure de la carcasse, et permet la fixation d'un rail fixe 21 sur un corps de carcasse 22 essentiellement tubulaire.

L'inclinaison à 45° du plan de glissement 3 du couloir d'alimentation, présente l'avantage déjà cité de permettre, en combinaison avec l'axe de rotation 4 du couvercle vertical, l'ajustement de la munition à poste. Par ailleurs, cette inclinaison permet de faciliter le positionnement de la bande, en accrochant la bande sur les cliquets d'avancement 14, 15, 16 soit en maintenant l'arme verticale (ce qui n'est pas possible pour les armes à couloir d'alimentation vertical), soit en inclinant l'arme de seulement 45° pour placer le couloir horizontal. Il est bien entendu que d'autres angles d'inclinaison sont possibles, pour autant que l'on limite suffisamment l'encombrement latéral, et que la composante horizontale du plan de glissement 3 soit suffisante pour que l'on puisse poser la bande de façon stable sur les cliquets d'avancement 14, 15 16 sans incliner l'arme. Des angles d'inclinaison raisonnable sont compris entre 20 et 70°, de préférence entre 30 et 60°.

Les figures 5 à 8 illustrent le fonctionnement du système d'alimentation de l'exemple de l'invention. Dans cet exemple, la mitrailleuse fonctionne selon un cycle dit « à culasse ouverte », soit un dispositif dans lequel hors tir, le verrou 17 et les pièces mobiles sont en position arrière, chambre ouverte et vide. Le cycle complet d'un tir est alors le suivant : Le déclanchement de la détente libère les pièces mobiles et le verrou 17, qui introduit au passage, via son ergo 20 une munition 18 dans la chambre. En fin de mouvement vers l'avant, le verrou est verrouillé à la bague de verrou, en arrière de la chambre du canon. Ce mouvement vers l'avant est induit par un ressort récupérateur comprimé lors du mouvement de retour vers l'arrière des pièces mobiles. La munition est ensuite percutée, et une récupération de gaz dans la dernière section du canon permet de renvoyer les pièces mobiles vers l'arrière en comprimant le ressort récupérateur.

Après le tir de la dernière munition, la détente étant généralement maintenue pressée, les pièces mobiles effectuent un dernier mouvement vers l'avant, et l'arme se retrouve culasse fermée, chambre vide. Selon que l'utilisateur recharge le mécanisme avant ou après de placer la bande de munition, les pièces mobiles sont donc an position avant ou arrière.

La figure 5 montre l'arme en position d'attente, pièces mobiles vers l'arrière, une munition à poste, l'ergot 20 du verrou 17 placé en arrière de la munition à poste. Les cliquets d'avancement de la bande 14, 15, 16 sont en position basse derrière l'avant dernière munition, la bande repose sur le cliquet anti-retour 12 et les clapets de maintien 11 appuient sur les maillons et maintiennent la munition en position au milieu de l'ouverture du couloir d'alimentation, prête à être alimentée par le verrou 17. Une griffe d'éjection 13 pousse sur les parties latérales antérieures 9 de l'avant dernier maillon.

Lors du déclanchement du tir, la dernière munition est entrainée dans la chambre par l'ergot 20 du verrou 17. Lors de ce mouvement, dès que la munition est entièrement démaillonnée, les cliquets d'avancement 14, 15, 16 commencent à avancer.

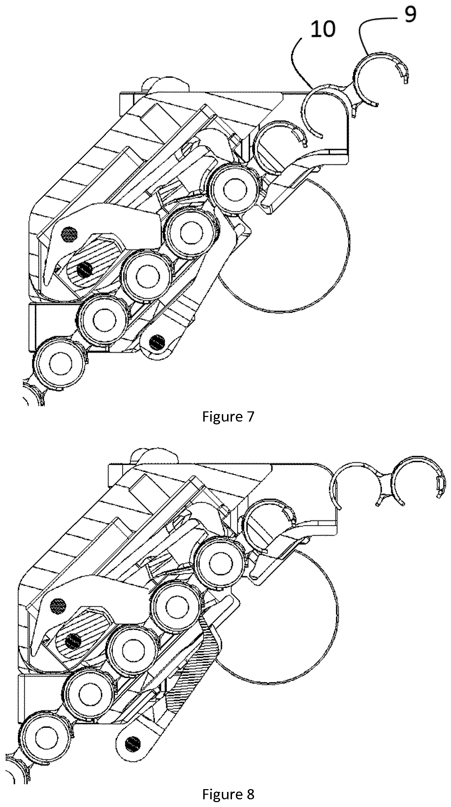

Ensuite, tel que représenté à la figure 6, lors du mouvement vers l'avant des pièces mobiles, les cliquets d'avancement 14, 15, 16 poussent la bande 5 vers la nouvelle position a poste. A la figure 7, le dernier maillon est éjecté par le mouvement de la bande, poussé par le maillon et la munition suivante. La griffe d'éjection 13 a poussé au passage sur les parties latérales 9 de l'avant dernier maillon, mais, cet avant dernier maillon étant lié à l'avant dernière munition, il n'est pas éjecté. Comme nous le verrons plus loin en effet, cette griffe d'éjection n'entre en effet en action que lors d' l'éjection des deux derniers maillons d'une bande. La figure 8 montre le mouvement de retour des cliquets d'avancement 14, 15, 16 lors du mouvement de recul des pièces mobiles. Lors de ce mouvement, la bande 5 est retenue en position par le cliquet anti-retour 12. En fin de cycle, on retrouve la situation de la figure 5.

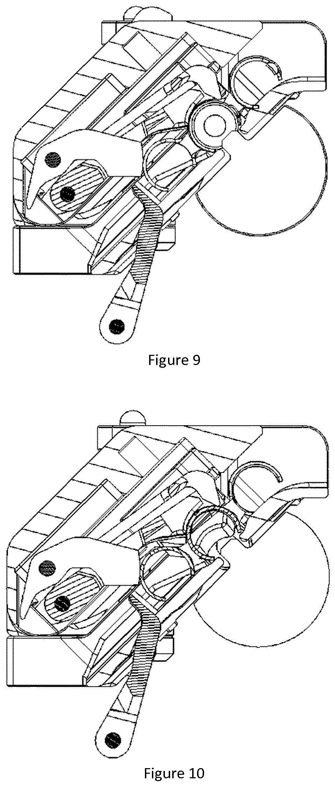

Les figures 9 à 12 illustrent l'éjection des deux derniers maillons, lors du tir de la dernière munition. A la figure 9, en début de cycle, la dernière munition est à poste et la partie centrale 10 du dernier maillon repose sur le cliquet anti-retour 12. Notons qu'à ce stade, les cliquets d'avancements latéraux, 15 et 16 ne reposent plus sur une munition et ne peuvent plus pousser sur le reste de la bande. Seul le cliquet central 14 est encore face à la partie centrale 10 de l'avant dernier maillon, qui, en début de cycle repose sur le cliquet anti retour 12. A la figure 10, la munition est chargée dans la chambre.

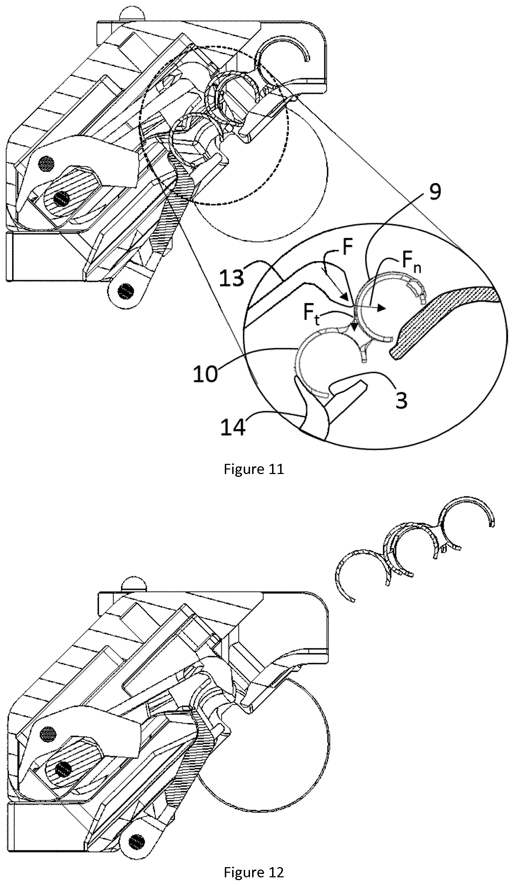

Ensuite, le cliquet central 14 pousse l'avant dernier maillon jusqu'à la position de la figure 11. Sur cette figure, nous avons représenté en insert un agrandissement où seul l'avant dernier maillon, l'éjecteur de maillon 13 et les surfaces de glissement 3 ont été représentés. On voit sur cet insert la force F appliquée par l'éjecteur 13 sur les parties latérales antérieures 9 de l'avant dernier maillon. Cette force se décompose en une force normale à la surface du maillon Fₙ et une Force tangentielle Ft. Au-delà d'une certaine position, la force tangentielle Fₜ dépasse le seuil de frottement statique, tandis que la force normale Fₙ est pratiquement parallèle au plan de glissement 3. A ce moment, le maillon est brutalement éjecté, et pousse aussi le maillon devant lui.

Enfin, lorsque le dernier maillon est éjecté, la griffe 13 ne repose plus sur une munition, et, de ce fait, occupe une position extrême qu'elle n'occupe jamais lors d'un cycle en présence d'une bande de munition. Ce mouvement vers une position extrême peut être mis à profit pour déplacer un indicateur de bande donnant une indication sur l'absence de bande.

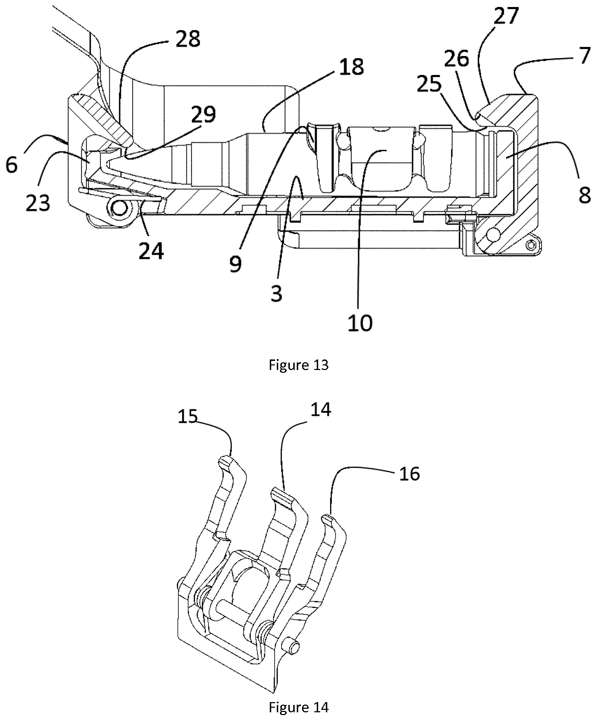

On voit à la figure 2 des glissières de maintien 6, 7 garnissant le bord supérieur des faces latérales 8, 23 du couloir d'alimentation. La figure 13 montre une coupe du couloir d'alimentation, avec une munition à poste. Sur cette figure, on distingue une glissière antérieure 6 et une glissière postérieure 7 retenant la munition 18 dans le couloir d'alimentation via des surfaces 25, 29 faisant face à la surface de glissement 3 de la bande.

Ces glissières 6,7 sont maintenues en position de maintien par des ressorts 24. Ces ressorts permettent d'introduire la bande en écartant les deux glissières. Cet écartement est avantageusement obtenu grâce à des surfaces inclinées 27, 28 sur la face supérieure des glissières, l'écartement étant alors obtenu en poussant simplement la bande contre les glissières. Notons qu'il suffirait qu'une seule de glissière soit mobile pour introduire la bande. Dans ce dernier cas, néanmoins, la manipulation serait moins souple (obligation d'introduire selon un sens prédéfini).

De façon alternative, les glissières escamotables 6, 7 pourraient être remplacées par des surfaces de maintien faisant face à la surface de glissement 3 directement fixées (voir, faisant partie) aux faces latérales 23, 8 du couloir d'alimentation, soit ces surface, soit les parois du couloir d'alimentation étant suffisamment souple(s) pour permettre le placement « en force » de la bande.

L'avantage de ces moyens de maintien est de permettre un placement de la bande, ou d'ouvrir le couvercle 2 du couloir d'alimentation indépendamment de l'orientation de l'arme sans que la bande ne tombe du couloir.

On remarque à la figure 13 la présence d'un chanfrein 26 au bord de la glissière postérieure 7. Ce chanfrein n'est présent que face à la dernière munition et permet de retirer la bande par un mouvement de torsion, ou un mouvement de soulèvement de la partie postérieure de la munition correspondant à l'entrée de la bande dans le couloir d'alimentation , ce qui pousse en arrière, grâce au chanfrein, la glissière postérieure 7.

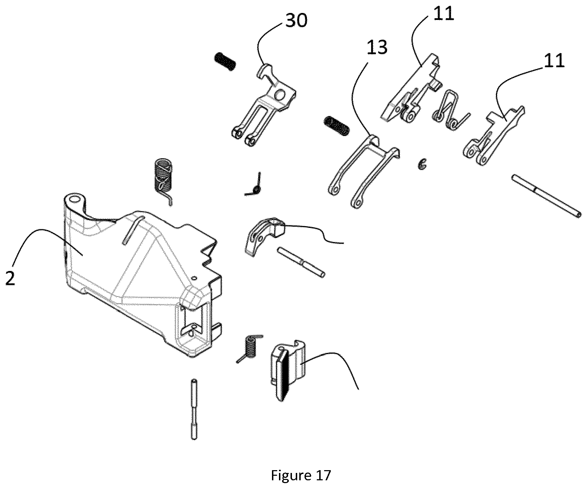

Les figures 14 à 17 montrent différents éléments séparés en perspective, de façon à clarifier les parties éventuellement cachées dans les figures précédentes.

La figure 14 montre une griffe d'entrainement de la bande. Cette griffe présente trois cliquets 14, 15, 16. Les deux cliquets latéraux prennent appui directement sur l'avant dernière munition, respectivement en avant et en arrière des parties latérales antérieures 9 de l'antépénultième maillon. Le cliquet 14 quant à lui pousse sur la partie centrale 10 de l'avant dernier maillon.

Ces trois cliquets 14, 15, 16 peuvent être solidaires, ou, de préférence, le cliquet central 14 est lié de façon élastique aux deux autres cliquets, par exemple via un ressort de torsion. En effet il existe une espace entre les munitions qui permet une amplitude de mouvement plus important pour les cliquets latéraux 15, 16 que pour le cliquet central, bloqué par la surface liant les maillons successifs. De ce fait, l'appui offert par le cliquet central 14 procure un appui moins fiable, et empêche potentiellement les cliquets latéraux de prendre une position optimale. Désolidariser le cliquet central 14 permet alors une amplitude de mouvement optimale pour les cliquets latéraux 15, 16.

Notons que, lors de l'éjection du dernier maillon, le cliquet central 14 n'est plus bloqué par la surface liant les maillons successifs, et il peut alors prendre une surface d'appui plus fiable. A ce moment, aussi, tel que mentionné plus haut, les cliquets latéraux 15, 16 ne reposent plus sur une munition, et ne participent donc plus au déplacement de la bande.

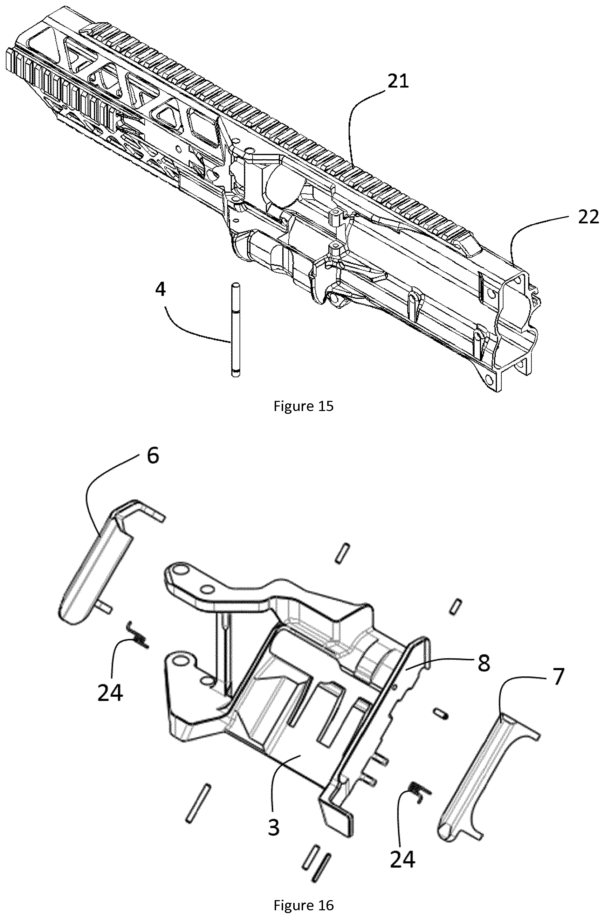

La figure 15 montre un corps de carcasse 22 tubulaire. Cette géométrie fermée permet d'obtenir une meilleure rigidité, et en particulier une meilleure résistance à la torsion que des profils ouverts. Comme on le voit sur cette figure, le positionnement latéral du couloir d'alimentation permet la fixation d'un rail Picatinny 21 fixe. En outre, le positionnement du mécanisme d'avance de bande côté carcasse plutôt que dans le couvercle permet une ouverture latérale de courte longueur, ce qui améliore encore les propriétés mécaniques de l'ensemble.

La figure 16 montre une vue éclatée du couloir d'alimentation. On y distingue les deux ressorts 24 de maintien des glissières 6, 7.

## Revendications

1. Mitrailleuse (1) à alimentation par bande de munition (5) comprenant un corps de carcasse (22) creux formé d'un seul tenant et comprenant un minimum d'orifice latéraux, ladite mitrailleuse comprenant un couloir d'alimentation et un couvercle disposés latéralement, ledit couloir d'alimentation et une surface interne du couvercle étant inclinés par rapport à la verticale, ledit couloir d'alimentation étant incliné suivant un angle compris entre 20° et 70°, de préférence entre 30° et 60°, ladite mitrailleuse comprenant sur sa surface supérieure, une interface fixe d'assemblage d'accessoire, cette interface pouvant de préférence comprendre un rail de type Picatinny (21) .

2. Mitrailleuse (1) selon la revendication 1 dans laquelle l'axe de rotation (4) du couvercle (2) est essentiellement vertical.

3. Mitrailleuse (1) selon l'une des revendication précédentes **caractérisé en ce que** le mouvement de fermeture dudit couvercle (2) comprend une composante parallèle audit couloir d'alimentation, de façon à permettre un ajustement précis de la première munition.

4. Mitrailleuse (1) selon l'une des revendication précédentes, dans laquelle ledit couloir d'alimentation comprend des moyens de maintien de la bande (5) de munition couvercle (2) ouvert.

5. Mitrailleuse (1) selon l'une des revendications précédentes, dans laquelle le couvercle (2) du couloir d'alimentation comprend des moyens d'éjection (14,13) des maillons de la bande (5) de munitions (18).

6. Mitrailleuse (1) selon l'une des revendications précédentes, dans laquelle le couvercle (2) du couloir d'alimentation comprend des moyens de maintien (11) des maillons de la bande (5) de munition.

7. Mitrailleuse (1) selon l'une des revendications précédentes, comprenant des moyens d'avancement (14) de la bande (5) de munition prenant appui en utilisation sur un maillon (10).

8. Mitrailleuse (1) selon l'une des revendications précédentes, dans laquelle le corps de carcasse (22) est réalisé dans un matériau ayant une densité inférieure à 6kg/l tel que l'aluminium ou le titane.

9. Mitrailleuse (1) selon l'une des revendications précédentes, dans laquelle la carcasse est réalisée par un procédé de fonderie.

10. Mitrailleuse (1) selon la revendication 9 dans laquelle la finition de la carcasse est réalisée par électroérosion après fonderie.

11. Mitrailleuse (1) selon l'une des revendications 1 à 9 dans laquelle la carcasse est réalisée par un procédé de fabrication additive.

## Patentansprüche

1. Maschinengewehr (1) mit Versorgung durch Munitionsband (5), umfassend einen hohlen, einteilig gebildeten Karkassenkörper (22) mit einem Minimum seitlicher Öffnungen, wobei das besagte Maschinengewehr (1) einen Versorgungskorridor und eine Abdeckung umfasst, die seitlich angeordnet sind, wobei der besagte Versorgungskorridor und eine innere Fläche der Abdeckung im Verhältnis zur Vertikalen geneigt sind, wobei der besagte Versorgungskorridor in einem Winkel zwischen 20° und 70°, vorzugsweise zwischen 30° und 60° geneigt ist, wobei das besagte Maschinengewehr auf seiner oberen Fläche eine feste Verbindungsschnittstelle für Zubehör umfasst, wobei diese Schnittstelle vorzugsweise eine Schiene vom Typ Picatinny (21) umfassen kann.

2. Maschinengewehr (1) nach Anspruch 1, wobei die Rotationsachse (4) der Abdeckung (2) im Wesentlichen vertikal ist.

3. Maschinengewehr (1) nach einem der vorangehenden Ansprüche, **dadurch gekennzeichnet, dass** die Verschlussbewegung der besagten Abdeckung (2) eine zum besagten Versorgungskorridor parallele Komponente umfasst, so dass eine präzise Ausrichtung der ersten Munition möglich ist.

4. Maschinengewehr (1) nach einem der vorangehenden Ansprüche, wobei der besagten Versorgungskorridor Haltemittel des Munitionsbands (5) bei offener Abdeckung (2) umfasst.

5. Maschinengewehr (1) nach einem der vorangehenden Ansprüche, wobei die Abdeckung (2) des Versorgungskorridors Auswurfmittel (14, 13) der Glieder des Bands (5) der Munition (18) umfasst.

6. Maschinengewehr (1) nach einem der vorangehenden Ansprüche, wobei die Abdeckung (2) des Versorgungskorridors Haltemittel (11) der Glieder des Munitionsbands (5) umfasst.

7. Maschinengewehr (1) nach einem der vorangehenden Ansprüche, umfassend Zuführmittel (14) des Munitionsbands (5), die sich in Verwendung auf einem Glied (10) abstützen.

8. Maschinengewehr (1) nach einem der vorangehenden Ansprüche, wobei der Karkassenkörper (22) aus einem Material hergestellt ist, das eine Dichte von unter 6 kg/l hat wie Aluminium oder Titan.

9. Maschinengewehr (1) nach einem der vorangehenden Ansprüche, wobei die Karkasse mittels eines Gießverfahrens hergestellt ist.

10. Maschinengewehr (1) nach Anspruch 9, wobei die Endbearbeitung der Karkasse nach dem Gießen durch Elektroerosion durchgeführt wird.

11. Maschinengewehr (1) nach einem der Ansprüche 1 bis 9, wobei die Karkasse durch ein additives Herstellungsverfahren hergestellt ist.

## Claims

1. A machine gun (1) for feeding an ammunition belt (5) comprising a hollow frame body (22) formed in one piece and comprising a minimum of lateral orifices, said machine gun comprising a feed channel and a cover disposed laterally, said feed channel and an inner surface of the cover being inclined relative to the vertical, said feed channel being inclined according to an angle of between 20° and 70°, preferably between 30° and 60°, said machine gun comprising, on its upper surface, a fixed accessory assembly interface, this interface preferably being able to comprise a rail of the Picatinny type (21).

2. The machine gun (1) according to claim 1, wherein the axis of rotation (4) of the cover (2) is essentially vertical.

3. The machine gun (1) according to one of the preceding claims, **characterized in that** the closure movement of said cover (2) comprises a component parallel to said feed channel, so as to allow a precise adjustment of the first ammunition item.

4. The machine gun (1) according to one of the preceding claims, wherein said feed channel comprises means for holding the ammunition belt (5) when the cover (2) is open.

5. The machine gun (1) according to one of the preceding claims, wherein the cover (2) of the feed channel comprises means (14, 13) for ejecting links of the ammunition (18) belt (5).

6. The machine gun (1) according to one of the preceding claims, wherein the cover (2) of the feed chain comprises means (11) for holding links of the ammunition belt (5).

7. The machine gun (1) according to one of the preceding claims, comprising means (14) for advancing the ammunition belt (5) bearing on a link (10) during use.

8. The machine gun (1) according to one of the preceding claims, wherein the frame body (22) is made from a material having a density of less than 6 kg/I, such as aluminum or titanium.

9. The machine gun (1) according to one of the preceding claims, wherein the frame is made using a casting method.

10. The machine gun (1) according to claim 9, wherein the finishing of the frame is done by spark machining after casting.

11. The machine gun (1) according to one of claims 1 to 9, wherein the frame is made by an additive manufacturing method.
